# EUROPEAN PATENT APPLICATION

(11) **EP 4 723 253 A1**
(43) Date of publication of application: **08.04.2026**
(21) Application number: 24848902.3
(22) Date of filing: 16.07.2024
(51) Int. Cl.: H01M 8/028, C09J 11/06, C09J 183/04, H01M 8/0204, H01M 8/021, H01M 8/0284, H01M 8/0286, H01M 8/10

(54) **ADHESIVE COMPOSITION FOR FUEL CELL SEALING MEMBERS, MEMBER FOR FUEL CELLS, AND METHOD FOR PRODUCING MEMBER FOR FUEL CELLS**

(30) Priority: 31.07.2023 JP 2023124066
(71) Applicant: Sumitomo Riko Company Limited, Komaki-shi, Aichi 485-8550 (JP)
(72) Inventor: OKUDA, Hirofumi, Komaki-shi, Aichi 485-8550 (JP); IMAI, Kentaro, Komaki-shi, Aichi 485-8550 (JP); YAMAMOTO, Kenji, Komaki-shi, Aichi 485-8550 (JP); MAZAKI, Tomohiro, Komaki-shi, Aichi 485-8550 (JP); ONISHI, Masahiro, Komaki-shi, Aichi 485-8550 (JP)
(74) Representative: Becker, Eberhard
(86) International application number: PCT/JP2024/025515
(87) International publication number: WO 2025/028246

(57) **Abstract**

This adhesive composition for fuel cell sealing members is for bonding a thin platy base (10), which is a constituent member of a fuel cell, to a sealing member (20) produced from a rubber composition, and comprises (A) an adhesive liquid comprising a solvent and an adhesive component which comprises a silane coupling agent as a main component or comprises a silane coupling agent and an organic titanate compound as main components and (B) a dye which is compatible with the adhesive component and dissolves in the solvent. The content of the dye in the adhesive composition is 3-25 parts by mass per 100 parts by mass of the non-volatile content of the adhesive composition. The adhesive composition is colored by the dye in a color which differs from the color of the base (10) or sealing member (20).

## Description

### Technical Field

The disclosure relates to an adhesive composition for bonding a constituent member of a fuel cell with a sealing member, a member for fuel cells produced using the adhesive composition, and a method for producing a member for fuel cells.

### Related Art

A fuel cell has a stack structure in which a large number of cells are laminated. A laminate of cells is fastened by end plates arranged on both sides in the lamination direction. For example, a cell of a solid polymer fuel cell includes: an electrode member, including a membrane electrode assembly (MEA); and separators, arranged to sandwich the electrode member. Around the electrode member or between adjacent separators, a sealing member made of rubber is arranged to ensure sealing properties and insulation properties against reaction gas or coolant. In order to maintain high sealing properties in an operating environment of the fuel cell, a method for integrating the sealing member with a mating member using an adhesive is effective. For example, Patent Document 1 describes, as a method for bonding a rubber gasket (sealing member) with a separator, a method in which a silane coupling agent-based primer is coated on a surface of the rubber gasket, the surface coated with the primer is brought into close contact with a separator, and heating is performed in a state in which the rubber gasket is crimped and fixed. Patent Document 2 describes, as an adhesive for bonding a sealing member with a separator, an adhesive having as a main component a copolymerized oligomer type silane coupling agent having hydrophilic functional groups and hydrophobic functional groups in a specific ratio. In Patent Document 2, the adhesive having the silane coupling agent as the main component is coated on a surface of a separator and dried, and then a rubber composition is laminated, crosslinked and bonded.

### Prior Art Documents

### Patent Documents

Patent Document 1: Japanese Patent Laid-open No. 2017-183198
Patent Document 2: International Publication No. WO2022/208926
Patent Document 3: Japanese Patent Laid-open No. 2018-59630

### SUMMARY OF INVENTION

### Technical Problem

The adhesive having the silane coupling agent as the main component is almost colorless and transparent, and a coating film formed on the surface of a coated object such as the separator is extremely thin. Hence, it is difficult to determine only by visual observation whether the adhesive is properly coated in a predetermined range. If there is coating unevenness or there is a place where no coating is present, there is a risk that the sealing member may peel off or sealing properties may deteriorate.

As a method for determining a coating state of an adhesive, a method can be considered in which a colorant is blended into the adhesive and the coating film is colored. However, since the colorant has no adhesion, there is a risk that adhesion may deteriorate depending on the blending amount. Pigments are known as colorants. However, since pigments do not dissolve in a solvent, precipitation is likely to occur and it is difficult to form a homogeneous coating film. Since pigment particles having no adhesion are dispersed in a formed adhesive layer, there is a risk that the sealing member may be likely to peel off, or stress may concentrate in the vicinity of the pigment particles due to compressive force in the lamination direction, and cracks starting from the pigment particles may occur in the sealing member.

In this regard, Patent Document 3 describes coloring, with a dye, an adhesive that bonds a core material having an annular shape and made of metal with an elastomer member. However, the adhesive described in Patent Document 3 is a general adhesive such as a phenolic resin-based or epoxy resin-based adhesive that may be used in a bearing part of an automobile, wind power generator or the like, and does not use a silane coupling agent. It is described that whether the dye is water-soluble or oil-soluble does not matter. That is, in Patent Document 3, a silane coupling agent is not assumed as an adhesive component, and no discussion is given of the compatibility between the dye and the adhesive component.

For example, in the adhesive, if the compatibility between the adhesive component and the dye is poor, the dye may precipitate or form lumps, and it is difficult to form a homogeneous coating film. In this case, there is a risk that the sealing member may be likely to peel off or cracks may occur in the sealing member due to compressive force in the lamination direction. In a fuel cell, high dimensional accuracy is required as constituent members are reduced in thickness, and the adhesive layer interposed between the sealing member and the mating member also has an extremely small thickness. In this way, in the adhesive for bonding a constituent member with the sealing member of the fuel cell, it is necessary to satisfy the required properties unique to fuel cells. Thus, it is difficult to achieve both adhesion and distinctiveness.

The disclosure has been made in view of such circumstances, and an object thereof is to provide an adhesive composition for fuel cell sealing members that can achieve both adhesion and distinctiveness, a member for fuel cells produced using the adhesive composition, and a method for producing a member for fuel cells.

### Solution to Problem

(1) To solve the above problem, an adhesive composition for fuel cell sealing members of the disclosure is an adhesive composition for fuel cell sealing members that bonds a base material of a thin plate shape that is a constituent member of a fuel cell with a sealing member produced from a rubber composition, and is characterized in the following. The adhesive composition includes: (A) an adhesive liquid, including an adhesive component and a solvent, the adhesive component having a silane coupling agent as a main component or having a silane coupling agent and an organic titanate compound as main components; and (B) a dye, compatible with the adhesive component and dissolving in the solvent. The content of the dye is 3 parts by mass or more and 25 parts by mass or less in the case of nonvolatile content in the adhesive composition being 100 parts by mass. The adhesive composition is colored by the dye to a color different from the color of the base material or the sealing member.

The adhesive composition for fuel cell sealing members (hereinafter sometimes simply referred to as "adhesive composition") of the disclosure is colored by a dye. In the case where an object to be coated is a base material, the adhesive composition is colored to a color different from the color of the base material; in the case where the object to be coated is a sealing member, the adhesive composition is colored to a color different from the color of the sealing member. Accordingly, it is easy to distinguish the adhesive composition on a surface of the object to be coated, and determination of whether a coating state is good is facilitated by visual observation or a color inspection machine or the like. As a result, coating unevenness, uncoated areas or the like are less likely to occur, and peeling of the sealing member, deterioration of sealing properties or the like can be suppressed. The "color" in the disclosure mainly means hue among the three elements of color, and refers to a tone of color, such as red, blue, green, and yellow.

In the adhesive composition of the disclosure, the dye is compatible with the adhesive component and dissolves in the solvent. Accordingly, the dye is less likely to precipitate, lumps are less likely to be formed, and a homogeneous coating film can be formed. As a result, peeling of the sealing member, deterioration of sealing properties or the like can be suppressed. The content of the dye is 3 parts by mass or more and 25 parts by mass or less in the case of nonvolatile content in the adhesive composition being 100 parts by mass. Since coloring power is exhibited by a relatively small amount of dye, adhesion is less likely to deteriorate even if the dye has no adhesion. In this way, according to the adhesive composition of the disclosure, both adhesion and distinctiveness can be achieved.

(2) In the configuration of (1) above, the adhesive composition for fuel cell sealing members may be configured to be coated on the base material or the sealing member to have a thickness of 0.01 µm or more and 1 µm or less. The present configuration is suitable for achieving reduced thickness and high dimensional accuracy of constituent members required for fuel cells.

(3) In any of the configurations above, the adhesive composition for fuel cell sealing members may be configured to be coated on the base material. According to the present configuration, since the sealing member (which may be an uncrosslinked rubber composition) made of flexible rubber is laminated on the base material of a thin plate shape, positional displacement of the sealing member is suppressed, and dimensional accuracy and workability are improved.

(4) In the configuration of (3) above, the base material may be configured to be a separator. According to the present configuration, adhesion reliability between the separator and the sealing member can be enhanced.

(5) In the configuration of (4) above, the separator may be configured to have a silver-based color, and the dye may be configured to have a black-based color or red-based color. According to the present configuration, the black-based color or red-based color adhesive composition is coated on the silver-based color separator. Accordingly, the presence of the adhesive composition is easily noticeable relative to the separator, and determination of whether the coating state is good can be easily performed.

(6) In any of the configurations above, the dye may be configured to be an xanthene dye or azine dye. According to the present configuration, it is easy to select a dye that is compatible with the adhesive component, dissolves in the solvent, and further enables coloring with a relatively small amount.

(7) A member for fuel cells of the disclosure includes a base material of a thin plate shape, a sealing member produced from a rubber composition, and an adhesive layer that bonds the base material with the sealing member. The adhesive layer is formed from the adhesive composition for fuel cell sealing members having the configuration of (1) above.

According to the member for fuel cells of the disclosure, in a production process, it is easy to distinguish the adhesive composition coated on the surface of the base material or sealing member, and determination of whether the coating state is good can be easily performed by visual observation or a color inspection machine or the like. Accordingly, adhesion defects are less likely to occur, and a high-quality member for fuel cells having high sealing properties is achieved.

(8) In the configuration of (7) above, the adhesive layer may be configured to have a thickness of 0.01 µm or more and 1 µm or less. The present configuration is suitable for achieving reduced thickness and high dimensional accuracy of constituent members required for fuel cells.

(9) In the configuration of (7) or (8) above, the base material may be configured to be a separator made of stainless steel. According to the present configuration, adhesion reliability between the separator and the sealing member can be enhanced. A separator made of stainless steel normally has a silver-based color due to metallic luster. Hence, in the case of being contrasted with the color of the separator, various colors such as black, red, blue, and green can be distinguished, and the range of selection of dyes used for coloring is increased.

(10) In any of the configurations of (7) to (9) above, the rubber composition may be configured to include one or more selected from ethylene-propylene rubber, ethylene-propylene-diene rubber, and ethylene-butene-diene rubber. According to the present configuration, a sealing member excellent in sealing properties, durability, high-temperature properties or the like can be achieved.

(11) A method for producing a member for fuel cells of the disclosure is a method for producing a member for fuel cells having the configuration of (7) above. The method is characterized by including: a coating process in which the adhesive composition for fuel cell sealing members is coated on the base material; a determination process in which it is determined whether a coating state is good according to a color of the adhesive composition coated; and a bonding process in which, in response to the coating state being determined to be good, the rubber composition that is uncrosslinked is arranged on a surface of the base material where the adhesive composition is coated to form a laminate, the laminate is subjected to heating and pressurization, the rubber composition is crosslinked to form the sealing member, and the sealing member is bonded to the base material.

According to the method for producing a member for fuel cells of the disclosure, in the determination process, it is determined whether the coating state is good according to the color of the adhesive composition coated. Accordingly, coating unevenness, uncoated areas or the like can be avoided. As a result, in the produced member for fuel cells, peeling of the sealing member, deterioration of sealing properties or the like can be suppressed.

### Effects of Invention

According to the adhesive composition for fuel cell sealing members of the disclosure, it is easy to distinguish the adhesive composition in a state of being coated on the surface of the base material or sealing member. Thus, determination of whether the coating state is good is facilitated by visual observation or a color inspection machine or the like. As a result, coating unevenness, uncoated areas or the like are less likely to occur, and peeling of the sealing member, deterioration of sealing properties or the like can be suppressed. By using a relatively small amount of a specific dye, both adhesion and distinctiveness can be achieved. The member for fuel cells of the disclosure has few adhesion defects and is excellent in sealing properties. In the method for producing a member for fuel cells of the disclosure, it is determined in the determination process whether the coating state is good according to the color of the adhesive composition coated. Accordingly, coating unevenness, uncoated areas of the adhesive composition or the like can be avoided.

### BRIEF DESCRIPTION OF THE DRAWINGS

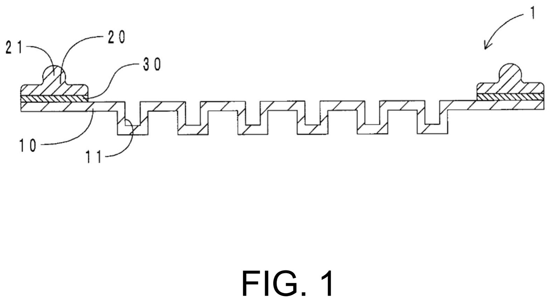

FIG. 1 is a cross-sectional view showing one embodiment of a member for fuel cells of the disclosure.

### DESCRIPTION OF THE EMBODIMENTS

Hereinafter, embodiments of an adhesive composition for fuel cell sealing members, a member for fuel cells, and a method for producing a member for fuel cells of the disclosure will be described. The embodiments are not limited to the following forms, and can be implemented in various modifications and improvement forms that can be made by those skilled in the art.

### <Adhesive Composition for Fuel Cell Sealing Members>

The adhesive composition of the disclosure bonds a base material of a thin plate shape that is a constituent member of a fuel cell with a sealing member produced from a rubber composition. Examples of the fuel cell include a solid polymer fuel cell (polymer electrolyte fuel cell, PEFC) (including direct methanol fuel cell (DMFC)). The base material varies depending on the type and configuration of the fuel cell. In the solid polymer fuel cell, examples of the base material include a separator, a membrane electrode assembly (MEA) of electrode members, and a gas diffusion layer (GDL). The base material and sealing member will be described later.

The adhesive composition of the disclosure includes: (A) an adhesive liquid, including an adhesive component and a solvent, the adhesive component having a silane coupling agent as a main component or having a silane coupling agent and an organic titanate compound as main components; and (B) a dye, compatible with the adhesive component of the adhesive liquid and dissolving in the solvent.

### (A) Adhesive Liquid

### [Adhesive Component]

The main component of the adhesive component is a silane coupling agent, or a silane coupling agent and an organic titanate compound. In the present specification, "main component" refers to a component that accounts for 50% by mass or more in the case of the entire adhesive component being 100% by mass. For example, the adhesive component may be in a form composed only of a silane coupling agent (having a content ratio of 100% by mass), may be in a form composed only of a silane coupling agent and an organic titanate compound (having a content ratio of 100% by mass in total), or may be in a form including a silane coupling agent, an organic titanate compound blended as necessary, and other components (having a content ratio of less than 50% by mass).

The silane coupling agent may be appropriately selected from a group of compounds having, as a functional group, one or more functional groups selected from amino group, vinyl group, and epoxy group, taking into consideration adhesion or the like. One type of silane coupling agent may be used alone, or two or more types may be used in mixture. Alternatively, a copolymerized oligomer in which two or more types of silane coupling agents are copolymerized may be used. As the copolymerized oligomer, one having the following hydrophilic functional groups of (a) and hydrophobic functional groups of (b) is suitable:
(a) one or more selected from the group consisting of silanol group, alkoxy group, amino group, isocyanate group, epoxy group, ureido group, carboxy group, and hydroxy group, and including at least silanol group or alkoxy group;
(b) one or more selected from the group consisting of vinyl group, (meth)acryloyl group, maleimide group, methyl group, ethyl group, styryl group, phenyl group, and mercapto group.

By making the hydrophilic functional group and hydrophobic functional group in the silane coupling agent the specific functional groups shown in (a) and (b), the adhesion, water resistance, and acid resistance of the adhesive layer can be improved. Among them, the hydrophobic functional group imparts hydrophobicity, thereby preventing water intrusion into the adhesive layer and contributing to improvement of water resistance and acid resistance. The hydrophilic functional group reacts with the base material or a component (such as carbon black) in the sealing member, contributing to adhesion. For example, a silane coupling agent having a functional group of (a) and a silane coupling agent having a functional group of (b) may be subjected to oligomerization reaction, and a copolymerized oligomer may be produced. In the present specification, (meth)acryloyl group means acryloyl group or methacryloyl group, and (meth)acrylate means acrylate or methacrylate.

Among the silane coupling agents having a hydrophilic functional group of (a), examples of a silane coupling agent that also have a hydrophilic functional group other than silanol group and alkoxy group include 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, 3-triethoxysilyl-N-(1,3-dimethyl-butylidene)propylamine, 3-isocyanatepropyltriethoxysilane, 3-ureidopropyltrialkoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-carboxypropyltrimethoxysilane, 3-carboxypropyltriethoxysilane, 3-hydroxypropyltrimethoxysilane, and 3-hydroxypropyltriethoxysilane. Among them, 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, and 3-isocyanatepropyltriethoxysilane are suitable.

Examples of the silane coupling agent having a hydrophobic functional group of (b) include vinyltrimethoxysilane, vinyltriethoxysilane, 3-(meth)acryloxypropyltrimethoxysilane, 3-(meth)acryloxypropyltriethoxysilane, N-(trimethoxysilylpropyl)maleimide, N-(triethoxysilylpropyl)maleimide, p-styryltrimethoxysilane, p-styryltriethoxysilane, phenyltrimethoxysilane, phenyltriethoxysilane, 3-mercaptopropylmethyltrimethoxysilane, 3-mercaptopropylmethyltriethoxysilane, methyltrimethoxysilane, methyltriethoxysilane, ethyltrimethoxysilane, ethyltriethoxysilane, n-propyltrimethoxysilane, and n-propyltriethoxysilane. Among them, vinyltrimethoxysilane, vinyltriethoxysilane, 3-(meth)acryloxypropyltrimethoxysilane, 3-(meth)acryloxypropyltriethoxysilane, N-(trimethoxysilylpropyl)maleimide, and N-(triethoxysilylpropyl)maleimide are suitable.

In the oligomerization reaction, first, each silane coupling agent is charged into a reactor including a distillation device and a stirrer, and stirred at about 60 °C for about 1 hour. Next, about 0.5 to 2.0 mol of an acid such as formic acid is added within 1 hour relative to a total of 1 mol of the silane coupling agent having a hydrophilic functional group shown in (a) and the silane coupling agent having a hydrophobic functional group shown in (b). During the addition of the acid, the temperature inside the reactor is maintained at about 65 °C. The mixture is further stirred for 1 to 5 hours to advance the reaction, and at the same time, alcohol generated by hydrolysis is distilled under reduced pressure. The distillation is terminated at a point when only water is present in the distillate. Thereafter, dilution is performed so as to achieve a silane concentration of 30% to 80% by mass. A copolymerized oligomer obtained in this way is an oligomer soluble in an alcohol-based organic solvent such as methanol and ethanol. From the viewpoint of enhancing film-forming properties, water resistance and acid resistance when the adhesive composition is coated, the copolymerized oligomer is desirably a trimer or higher.

In the adhesive component, examples of components other than the silane coupling agent include an organic titanate compound and an aluminate coupling agent. In the case of using one or more selected from organic titanate compound and aluminate coupling agent, a total content ratio of the same and the silane coupling agent may be 60% by mass or more, 70% by mass or more, 80% by mass or more, 90% by mass or more, or further 100% by mass. For the purpose of enhancing adhesion to the base material and improving water resistance and acid resistance of the adhesive layer to be formed by imparting hydrophobicity, phenol resin, bismaleimide resin, vinyl resin or the like may be added. In the case of adding these resins, the amount may be 20% by mass or less in the case of the entire adhesive component being 100% by mass.

In the case of including an organic titanate compound, acid-resistant adhesion, particularly acid-resistant adhesion in high-temperature and long-term use, is improved. As the organic titanate compound, it is desirable to use one or more selected from titanium alkoxide, titanium chelate, and titanium acylate.

Examples of titanium alkoxide include tetramethyl titanate, tetraethyl titanate, tetra n-propyl titanate, tetraisopropyl titanate, tetra-n-butyl titanate, tetraisobutyl titanate, tetra-t-butyl titanate, tetraoctyl titanate, tetrastearyl titanate, tetra(2-ethylhexyl) titanate, and tetramethyl titanate. Among them, tetraisopropyl titanate, tetra-n-butyl titanate, and tetrastearyl titanate are suitable.

Examples of titanium chelate include titanium acetylacetonate, titanium octylene glycolate, titanium tetraacetylacetonate, titanium ethyl acetoacetate, and titanium triethanol aluminate. Among them, titanium acetylacetonate and titanium ethyl acetoacetate are suitable.

Examples of titanium acylate include titanium isostearate, tri-n-butoxytitanium monostearate, di-i-propoxytitanium distearate, titanium stearate, di-i-propoxytitanium diisostearate, and (2-n-butoxycarbonylbenzoyloxy)tributoxytitanium. Among them, titanium stearate is suitable.

In the case of including an aluminate coupling agent, coating film strength is improved. Examples of the aluminate coupling agent include aluminum alkyl acetoacetate diisopropylate, aluminum ethyl acetoacetate diisopropylate, aluminum tris(ethyl acetoacetate), aluminum isopropylate, aluminum diisopropylate mono secondary butyrate, aluminum secondary butyrate, aluminum ethylate, aluminum bis(ethyl acetoacetate) mono(acetylacetonate), aluminum tris(acetylacetonate), and aluminum monoisopropoxy monooleoxyethyl acetoacetate. One of them can be used alone, or two or more can be used in mixture. Among them, aluminum alkyl acetoacetate diisopropylate, aluminum ethyl acetoacetate diisopropylate, and aluminum tris(ethyl acetoacetate) are suitable.

### [Solvent]

The solvent is not particularly limited if it is capable of dissolving the adhesive component. Examples include: an alcohol-based organic solvent, such as methanol, ethanol, isopropanol, 2-ethoxyethanol (ethylene glycol monoethyl ether), and butoxyethanol (ethylene glycol monobutyl ether); and a ketone-based organic solvent, such as acetone, methyl ethyl ketone, and methyl isobutyl ketone. The concentration of the adhesive component in the adhesive liquid may be appropriately determined in consideration of adhesion or the like, and may be, for example, 0.5% by mass or more and 25% by mass or less.

As the adhesive liquid having the aforementioned copolymerized oligomer of silane coupling agent and solvent, a commercially available product such as "CHEMLOK (registered trademark) 5151" produced by LORD Corporation, "MEGUM (registered trademark) 3290" produced by Dow Chemical Company, or "X-12-1048" and "KR-513" produced by Shin-Etsu Chemical Co., Ltd. may be used.

### (B) Dye

As the dye, one that is compatible with the adhesive component of the adhesive liquid and dissolves in the solvent of the adhesive liquid is adopted. Here, "compatible with the adhesive component" means a state without turbidity or precipitate is achieved when a state after 1.5 g of dye is added to 100 mL of adhesive liquid having an adhesive component concentration of 5% by mass and stirred for 5 minutes is visually observed.

The adhesive composition of the disclosure is colored by a dye to a color different from the color of the base material or the sealing member. In the case of coating the adhesive composition on the base material, it is sufficient that the adhesive composition is colored to a color different from the color of the base material; in the case of coating on the sealing member, it is sufficient that the adhesive composition is colored to a color different from the color of the sealing member. By making the coating film neither colorless nor transparent but have a color different from the color of the object to be coated, determination of whether the coating state is good is facilitated. The color of the dye is not limited, but a color that stands out against the color of the object to be coated is desirable. For example, in the case where the base material is a separator of silver-based color, when a dye of black-based color or red-based color is used, the presence of the adhesive composition coated on the base material can be easily identified, which is suitable.

From the viewpoint of making the color as dark as possible to enhance distinctiveness, the content of the dye is 3 parts by mass or more in the case of nonvolatile content in the adhesive composition being 100 parts by mass. The content is preferably 5 parts by mass or more, and more preferably 10 parts by mass or more. On the other hand, from the viewpoint of ensuring desired adhesion, the content of the dye is 25 parts by mass or less in the case of nonvolatile content in the adhesive composition being 100 parts by mass. The content is preferably 20 parts by mass or less, and more preferably 15 parts by mass or less. In the present specification, "nonvolatile content" means the mass of residual components after the solvent is removed from the adhesive composition. It is desirable that the presence of the adhesive composition can be identified even in the case of a thin coating film. For example, even if the coating film of the adhesive composition has a thickness of 0.01 µm or more and 1 µm or less, it is suitable that the coloring power of the dye is exhibited and the presence of the adhesive composition can be identified.

As a dye having high coloring power even in a relatively small amount, an xanthene dye, an azine dye or the like is suitable. Among xanthene dyes, rhodamines are desirable. Examples of a red-based color dye include Rhodamine B (C.I. Basic Violet 10), C.I. Solvent Red 49, and C.I. Basic Red 1:1; examples of a black-based color dye include C.I. Solvent Black 7. "C.I." means Color Index. The Color Index is a database of coloring materials constructed by the Society of Dyers and Colourists and others.

### <Member for Fuel Cells>

The member for fuel cells of the disclosure includes a base material of a thin plate shape, a sealing member produced from a rubber composition, and an adhesive layer that bonds the base material with the sealing member. The adhesive layer is formed from the adhesive composition for fuel cell sealing members of the disclosure.

First, one embodiment of the member for fuel cells of the disclosure is described. FIG. 1 shows a cross-sectional view of a member for fuel cells of the present embodiment. As shown in FIG. 1, a member for fuel cells 1 includes a separator 10, a sealing member 20, and an adhesive layer 30. The separator 10 is made of stainless steel and in the shape of a silver-based color rectangular thin plate. In a region of the separator 10 that overlaps an electrode member (not shown) when constituting a fuel cell, a total of six grooves 11 extending in a longitudinal direction are recessed. The groove 11 serves as a flow path for a coolant or the like. The sealing member 20 is arranged on an upper surface peripheral portion of the separator 10. The sealing member 20 has a frame shape as viewed from above. The sealing member 20 includes a crosslinked product of a rubber composition having ethylene-butene-diene rubber. The sealing member 20 includes a lip 21 that protrudes upward. The top of the lip 21 has a curved surface shape. The sealing member 20 elastically contacts another separator that is laminated when constituting a fuel cell. The adhesive layer 30 has a frame shape as viewed from above and is arranged between the separator 10 and the sealing member 20. The adhesive layer 30 is formed from the adhesive composition of the disclosure and has a red-based color. The adhesive layer 30 bonds the separator 10 with the sealing member.

The member for fuel cells 1 is produced as follows. First, a rubber composition for forming the sealing member 20 is prepared. The prepared rubber composition is molded into a predetermined shape and an uncrosslinked rubber member is produced. Next, an adhesive composition is coated on a predetermined position on the upper surface of the separator 10, and the coating state is confirmed. Here, since the adhesive composition has a red-based color, it is easy to distinguish the adhesive composition on the upper surface of the silver-based color separator 10. If the coating state is good, the produced rubber member is laminated on the upper surface of the coating film, and crosslinking and bonding are performed under predetermined conditions. In this way, the member for fuel cells 1 is produced in which the separator 10 and the sealing member 20 are integrated via the adhesive layer 30. Next, individual members constituting the member for fuel cells of the disclosure are described.

### [Base Material]

As described above, the base material used in a fuel cell varies depending on the type and configuration of the fuel cell. In the solid polymer fuel cell, examples of the base material include a separator, a membrane electrode assembly of electrode members, and a gas diffusion layer. Among them, examples of a material of the separator include stainless steel, titanium, copper, magnesium, aluminum, carbon, graphite, and conductive resin (thermoplastic resin or thermosetting resin containing carbon, graphite, polyacrylonitrile-based carbon fibers or the like). From the viewpoints of acid resistance and cost, stainless steel (particularly austenitic type) and titanium (particularly pure titanium) are desirable. On a surface of a main body made of the above materials, a carbon thin film such as diamond-like carbon film (DLC film) or graphite film may be formed by treatments such as physical vapor deposition (PVD) and chemical vapor deposition (CVD). In a region (region where the adhesive composition is coated) of the separator where the sealing member is bonded, surface treatment such as forming irregularities may be performed to enhance wettability of the adhesive composition and improve adhesion. The configuration of the separator, including flow paths and manifold holes to be formed or the like, is not limited, and the shape, thickness or the like may be determined as appropriate. Considering power generation performance or the like, the separator has a thickness of preferably 0.1 mm or more and 0.5 mm or less.

### [Sealing Member]

The sealing member is produced by injection molding, press molding, or the like of a rubber composition. A rubber component constituting the rubber composition may be liquid rubber or solid rubber. Examples of the rubber component include ethylene-propylene rubber (EPM), ethylene-propylene-diene rubber (EPDM), ethylene-butene-diene rubber (EBT), silicone rubber, fluorine rubber, butyl rubber (IIR), ethylene-propylene rubber (EPM), acrylonitrile-butadiene rubber (NBR), hydrogenated acrylonitrile-butadiene rubber (H-NBR), styrene-butadiene rubber (SBR), and butadiene rubber (BR). Among them, it is desirable to use one or more selected from EPM, EPDM, and EBT for the reason that they have high water resistance and acid resistance under high temperature conditions. The rubber composition may contain, in addition to the rubber component, a crosslinking agent, a crosslinking aid, a plasticizer, a reinforcing agent, an antioxidant, a processing aid or the like.

As the crosslinking agent, it is desirable to use an organic peroxide for the reason that it contains no volatile component such as sulfur. Among the organic peroxides, dialkyl peroxide, peroxyketal, peroxyester, ketone peroxide, diacyl peroxide, peroxydicarbonate or the like, which are capable of crosslinking at relatively low temperatures, are suitable. Examples of the crosslinking aid include a maleimide compound, triallyl cyanurate (TAC), triallyl isocyanurate (TAIC), trimethylolpropane trimethacrylate (TMPT), bifunctional (meth)acrylate, and 1,2-polybutadiene. Examples of the plasticizer include: a petroleum-based plasticizer, such as process oil, lubricating oil, paraffin, liquid paraffin, and vaseline; a fatty oil-based plasticizer, such as castor oil, linseed oil, rapeseed oil, and coconut oil; waxes, such as tall oil, sub, beeswax, carnauba wax, and lanolin; linoleic acid, palmitic acid, stearic acid, and lauric acid. Examples of the reinforcing agent include carbon black and amorphous silica (white carbon). Examples of the antioxidant include a phenolic antioxidant, an amine-based antioxidant, an imidazole-based antioxidant, a phosphoric acid-based antioxidant, and wax.

The sealing member may be arranged annularly along an outer peripheral edge on the surface of the base material, or may be arranged to surround a predetermined portion. The sealing member has a thickness of preferably 0.2 mm or more and 5 mm or less, and more preferably 0.5 mm or more and 3 mm or less.

### [Adhesive Layer]

The adhesive layer that bonds the base material with the sealing member is formed from the adhesive composition for fuel cell sealing members of the disclosure described above. From the viewpoint of achieving reduced thickness and high dimensional accuracy of constituent members, it is desirable that the adhesive layer has a thickness of 0.01 µm or more and 1 µm or less. The color of the adhesive layer is not particularly limited if it differs from the color of the member (base material or sealing member) on which the adhesive composition is coated.

### <Method for Producing Member for Fuel Cells>

One embodiment of the method for producing a member for fuel cells of the disclosure includes a coating process, a determination process, and a bonding process. Each process will be described in order below.

### [Coating Process]

In the present process, the adhesive composition for fuel cell sealing members of the disclosure is coated on the base material. The adhesive composition may be prepared by producing a dye solution in which a dye is dissolved in a solvent in advance, and then stirring this dye solution together with an adhesive liquid. Alternatively, the adhesive composition may be prepared by adding and stirring a dye into an adhesive liquid. The adhesive composition may be coated by brush coating, or by a coating machine such as a dispenser, blade coater, bar coater, die coater, comma coater (registered trademark), or roll coater, or by a spray method, dipping method or the like, and may be naturally dried at room temperature or, if necessary, heated and dried. The adhesive composition may be coated in multiple layers of two or more layers. However, single-layer coating is desirable from the viewpoint of shortening the coating process.

### [Determination Process]

In the present process, determination of whether the coating state is good is performed according to the color of the adhesive composition coated (coating film). The determination may be performed by visual observation, by a color inspection machine or the like, or by both.

### [Bonding Process]

In the present process, in the case where the coating state of the adhesive composition is determined to be good, an uncrosslinked rubber composition is arranged on the surface of the base material where the adhesive composition is coated to form a laminate, the laminate is subjected to heating and pressurization, the rubber composition is crosslinked to form the sealing member, and the sealing member is bonded to the base material. In the present process or before the present process, first, a rubber composition for forming the sealing member is prepared. The rubber composition may be prepared by kneading the rubber component and a component blended as necessary using a roll, kneader, Banbury mixer, or the like. The prepared rubber composition may be molded into a predetermined shape by injection molding, press molding, or the like (production of an uncrosslinked rubber member). By doing so, complex positioning becomes unnecessary, continuous processing is facilitated, and productivity is improved. The rubber composition (rubber member) is laminated on the coating film formed on the base material, and heating and pressurization are performed. The heating and pressurization may be performed using a press machine, bonding machine or the like. The heating temperature may be set to 130 °C or higher and 200 °C or lower in consideration of the crosslinking temperature of the rubber component. The pressure during pressurization may be appropriately set in consideration of adhesion and suppression of destruction of the sealing member. The heating and pressurization time (bonding time) may be about 3 to 30 minutes.

In the above, an embodiment has been described in which crosslinking and bonding are performed using an uncrosslinked rubber composition in the bonding process. However, the member for fuel cells of the disclosure may also be produced by a method in which by a rubber composition is crosslinked and a sealing member is produced in advance, the sealing member is arranged on the surface of the base material where the adhesive composition is coated, and heating and pressurizing are performed as necessary.

### Examples

Next, the disclosure will be described more specifically by way of examples. Various adhesive compositions were produced, and their distinctiveness in the case of being coated on a base material was evaluated. A sealing member was bonded to the base material using the produced adhesive compositions to produce evaluation samples of which the adhesion and compression durability of sealing member were evaluated.

### <Distinctiveness of Adhesive Composition>

### [Adhesive Liquid (A1)]

Two types of silane coupling agents were copolymerized and a copolymerized oligomer was produced. First, 100 parts by mass of vinyltrimethoxysilane, 68.4 parts by mass of 3-aminopropyltrimethoxysilane, and 33.1 parts by mass of water were charged into a reactor including a distillation device and a stirrer, and stirred at about 60 °C for about 1 hour. Next, formic acid was added within 1 hour so that the amount thereof added was 1.0 mol relative to a total mass of the silane coupling agents being 1 mol. During the addition of formic acid, the temperature inside the reactor was maintained at about 65 °C. The mixture was further stirred for 3 hours to advance the reaction, and at the same time, alcohol generated by hydrolysis was distilled under reduced pressure. The distillation was terminated at a point when only water was present in the distillate. Thereafter, dilution was performed so as to achieve a silane concentration of 50% by mass, and a copolymerized oligomer was obtained. A hydrophobic functional group in the copolymerized oligomer is vinyl group, and a hydrophilic functional group is silanol group, alkoxy group, and amino group. The produced copolymerized oligomer was diluted with a mixed solvent of methanol and ethanol (having a mass ratio of 1:1) to obtain an adhesive liquid (A1) having a concentration of 5% by mass of the copolymerized oligomer (silane coupling agent) as an adhesive component.

### [Adhesive Liquid (A2)]

12.5 parts by mass of tetraisopropyl titanate as an organic titanate compound were mixed relative to 100 parts by mass of the copolymerized oligomer (silane coupling agent) used in the adhesive liquid (A1) to form an adhesive component. This mixture was diluted with a mixed solvent of ethanol and 2-ethoxyethanol (having a mass ratio of 9:1), and an adhesive liquid (A2) having a concentration of 5% by mass of the adhesive component was obtained.

### [Adhesive Liquid (A3)]

50 parts by mass of tetraisopropyl titanate as an organic titanate compound were mixed relative to 100 parts by mass of the copolymerized oligomer (silane coupling agent) used in the adhesive liquid (A1) to form an adhesive component. This mixture was diluted with a mixed solvent of ethanol and 2-ethoxyethanol (having a mass ratio of 9:1), and an adhesive liquid (A3) having a concentration of 5% by mass of the adhesive component was obtained.

Furthermore, commercially available adhesives containing a copolymerized oligomer type silane coupling agent were prepared as adhesive liquids (A4) to (A6).

### [Adhesive Liquid (A4)]

"CHEMLOK (registered trademark) 5151" produced by LORD Corporation was used. Hydrophilic functional groups in the copolymerized oligomer included silanol group and alkoxy group, and hydrophobic functional groups included vinyl group. The solvent (diluent) was ethanol.

### [Adhesive Liquid (A5)]

"MEGUM (registered trademark) 3290" produced by Dow Chemical Company was used. Hydrophilic functional groups in the copolymerized oligomer included silanol group, alkoxy group, and amino group, and hydrophobic functional groups included vinyl group. The solvent was ethanol.

### [Adhesive Liquid (A6)]

"KR-513" produced by Shin-Etsu Chemical Co., Ltd. was used. Hydrophilic functional groups in the copolymerized oligomer included silanol group and alkoxy group, and hydrophobic functional groups included acryloyl group and methyl group. The solvent was ethanol.

### [Colorant]

As a colorant, five types of dyes and one type of pigment were prepared. The details are as follows.
(i) Dye
   (B1) Rhodamine B (C.I. Basic Violet 10), red color.
   (B2) C.I. Solvent Red 49, red color.
   (B3) C.I. Basic Red 1:1, red color.
   (B4) C.I. Solvent Black 7, black color.
   (B5) C.I. Acid Red 27, red color.
(ii) Pigment
   Carbon black: "Aqua-Black (registered trademark) 001" produced by Tokai Carbon Co., Ltd., black color.

### [Production of Adhesive Composition]

A colorant was added to a solvent and stirred to produce a colorant liquid in advance. By stirring this colorant liquid and an adhesive liquid altogether, various adhesive compositions were produced. For the solvent added to the colorant, the same solvent as that for the adhesive liquid to be combined was used. The produced adhesive compositions were assigned numbers from 1 to 15. Table 1 and Table 2 show the components (combinations of adhesive components of the adhesive liquid and colorants, as well as their respective contents) of the adhesive compositions. In Table 1 and Table 2, the units of the components are parts by mass in the case of nonvolatile content in the adhesive composition being 100 parts by mass.

**[Table 1]**

| | | | | No. 1 | No. 2 | No. 3 | No. 4 | No. 5 | No. 6 | No. 7 | No. 8 | No. 9 | No. 10 | No. 11 | No. 12 |
|---|---|---|---|---|---|---|---|---|---|---|---|---|---|---|---|
| | (A) Type of adhesive liquid | | | (A1) | (A1) | (A2) | (A3) | (A1) | (A1) | (A1) | (A1) | (A4) | (A5) | (A6) | (A1) |
| Adhesive composition (adhesive layer) [Unit: parts by mass of nonvolatile content] | Adhesive component | Silane coupling agent (copolymerized oligomer) | | 97 | 90 | 80 | 60 | 75 | 90 | 90 | 90 | - | - | - | 90 |
| | | Organic titanate compound | | - | - | 10 | 30 | - | - | - | - | - | - | - | - |
| | | CHEMLOK* 5151 (commercially available adhesive) | | - | - | - | - | - | - | - | - | 90 | - | - | - |
| | | MEGUM* 3290 (commercially available adhesive) | | - | - | - | - | - | - | - | - | - | 90 | - | - |
| | | KR-513 (commercially available adhesive) | | - | - | - | - | - | - | - | - | - | - | 90 | - |
| | Colorant | (B) Dye | (B1) C.I. Basic Violet 10 | 3 | 10 | 10 | 10 | 25 | - | - | - | 10 | 10 | 10 | 10 |
| | | | (B2) C.I. Solvent Red 49 | - | - | - | - | - | 10 | - | - | - | - | - | - |
| | | | (B3) C.I. Basic Red 1:1 | - | - | - | - | - | - | 10 | - | - | - | - | - |
| | | | (B4) C.I. Solvent Black 7 | - | - | - | - | - | - | - | 10 | - | - | - | - |
| | | | (B5) C.I. Acid Red 27 | - | - | - | - | - | - | - | - | - | - | - | - |
| | | Pigment | Carbon black | - | - | - | - | - | - | - | - | - | - | - | - |
| Adhesive layer thickness [um] | | | | 1 | 0.1 | 0.3 | 0.1 | 0.01 | 0.2 | 0.2 | 0.2 | 0.2 | 0.2 | 0.2 | 0.2 |
| Base material | | | | SUS | SUS | SUS | SUS | SUS | SUS | SUS | SUS | SUS | SUS | SUS | Ti |
| Solubility of colorant in solvent | | | | ○ | ○ | ○ | ○ | ○ | ○ | ○ | ○ | ○ | ○ | ○ | ○ |
| Compatibility of colorant with adhesive component | | | | ○ | ○ | ○ | ○ | ○ | ○ | ○ | ○ | ○ | ○ | ○ | ○ |
| Evaluation result | Distinctiveness | | | ○ | ○ | ○ | ○ | ○ | ○ | ○ | ○ | ○ | ○ | ○ | ○ |
| | Initial adhesion | | | ○ | ○ | ○ | ○ | ○ | ○ | ○ | ○ | ○ | ○ | ○ | ○ |
| | Acid-resistant adhesion (acidic water 90 °C×336 hours) | | | ○ | ○ | ○ | ○ | ○ | ○ | ○ | ○ | ○ | ○ | ○ | ○ |
| | Compression durability of sealing member | | | ○ | ○ | ○ | ○ | ○ | ○ | ○ | ○ | ○ | ○ | ○ | ○ |

| | | | | | | | | | | | | | | | |
|---|---|---|---|---|---|---|---|---|---|---|---|---|---|---|---|
| *Registered trademark | | | | | | | | | | | | | | | |

**[Table 2]**

| | | | | No. 13 | No. 14 | No. 15 |
|---|---|---|---|---|---|---|
| | (A) Type of adhesive liquid | | | (A1) | (A1) | (A1) |
| Adhesive composition (adhesive layer) [Unit: parts by mass of nonvolatile content] | Adhesive component | Silane coupling agent (copolymerized oligomer) | | 70 | 80 | 90 |
| | | Organic titanate compound | | - | - | - |
| | | CHEMLOK* 5151 (commercially available adhesive) | | - | - | - |
| | | MEGUM* 3290 (commercially available adhesive) | | - | - | - |
| | | KR-513 (commercially available adhesive) | | - | - | - |
| | Colorant | (B) Dye | (B1) C.I. Basic Violet 10 | 30 | - | - |
| | | | (B2) C.I. Solvent Red 49 | - | - | - |
| | | | (B3) C.I. Basic Red 1:1 | - | - | - |
| | | | (B4) C.I. Solvent Black 7 | - | - | - |
| | | | (B1) C.I. Basic Violet 10 | - | 20 | - |
| | | Pigment | Carbon black | - | - | 10 |
| Adhesive layer thickness [um] | | | | 0.2 | 0.2 | 0.2 |
| Base material | | | | SUS | SUS | SUS |
| Solubility of colorant in solvent | | | | ○ | ○ | × |
| Compatibility of colorant with adhesive component | | | | ○ | × | × |
| Evaluation result | Distinctiveness | | | ○ | × | ○ |
| | Initial adhesion | | | × | - | - |
| | Acid-resistant adhesion (acidic water 90 °C×336 hours) | | | - | - | - |
| | Compression durability of sealing member | | | ○ | × | × |

| | | | | | | |
|---|---|---|---|---|---|---|
| *Registered trademark | | | | | | |

### [Solubility of Colorant in Solvent]

The colorant was added to the solvent for the adhesive liquid to be combined during production of the adhesive composition, the mixture was stirred, and whether the colorant dissolved was visually observed. As a result, all the dyes used in adhesive compositions No. 1 to No. 14 dissolved (indicated by the ○ mark in Table 1 and Table 2), and the pigment used in adhesive composition No. 15 did not dissolve (indicated by the × mark in Table 2).

### [Compatibility of Colorant with Adhesive Component]

1.5 g of colorant was added to 100 mL of adhesive liquid having a concentration of 5% by mass of the adhesive component to be combined during production of the adhesive composition, and a state after stirring for 5 minutes was visually observed. The concentration of adhesive components in the adhesive liquids (A4) to (A6) using commercially available adhesives was adjusted to 5% by mass using solvents as appropriate. The compatibility was evaluated as good in the case of no turbidity or precipitate, and as poor in the case of at least one of turbidity and precipitate being observed. As a result, the compatibility of the dyes used in adhesive compositions No. 1 to No. 13 was good (indicated by the ○ mark in Table 1 and Table 2). However, the compatibility of the dye used in adhesive composition No. 14 and the pigment used in adhesive composition No. 15 was poor (indicated by the × mark in Table 2).

### [Evaluation of Distinctiveness]

The produced adhesive composition was spray-coated on a surface of a base material to have a predetermined thickness, and naturally dried at room temperature (20 °C±5°C), and then the coating film was visually observed. As the base material, a stainless steel plate having a silver-based color and made of SUS304 and a titanium plate having a silver-based color and made of pure titanium were used. Both base materials have a rectangular plate shape with a width of 25 mm, a length of 60 mm, and a thickness of 1.5 mm. The adhesive composition was coated in a square area of 25 mm width and 25 mm length on the surface of the base material. The types of base materials and the thickness of the coating film (adhesive layer) are collectively shown in Table 1 and Table 2 above. In Table 1 and Table 2, the stainless steel plate is indicated as "SUS" and the titanium plate is indicated as "Ti".

As a result, regarding adhesive compositions No. 1 to No. 13 and No. 15, regardless of the thickness of the coating film, the color of the coating film differed from the color of the base material, and it was possible to distinguish the coating film on the base material (indicated by the ○ mark in Table 1 and Table 2). However, in sample No. 13, the content of the dye exceeded 25 parts by mass. Hence, although distinctiveness was exhibited, adhesion decreased as described later. On the other hand, regarding adhesive composition No. 14, even though the coating film had a thickness of 0.2 µm, the color was pale, and it was difficult to distinguish the coating film on the base material (indicated by the × mark in Table 2). The reason for this is considered to be poor compatibility of the dye with the adhesive component. Regarding adhesive composition No. 15 using a black pigment, it was possible to distinguish the coating film on the base material.

<Adhesion of Adhesive Composition and Compression Durability of Sealing Member>

### [Production of Evaluation Sample]

First, a rubber composition for sealing member formation was prepared as follows. 100 parts by mass of ethylene-butene-diene rubber ("EBT-K-9330M" produced by Mitsui Chemicals, Inc.) as a rubber component, 1.0 part by mass of a phenolic antioxidant ("Nocrac (registered trademark) NS-5" produced by Ouchi Shinko Chemical Industrial Co., Ltd.), 50 parts by mass of carbon black ("Seast (registered trademark) SO" produced by Tokai Carbon Co., Ltd.) as a reinforcing agent, and 15 parts by mass of poly-α-olefin ("PAO601" produced by Nippon Steel Chemical & Material Co., Ltd.) as a plasticizer were kneaded at 120 °C for 5 minutes using a Banbury mixer. Then, the kneaded product was cooled, 6 parts by mass of 1,1-di(t-butylperoxy)cyclohexane ("Perhexa (registered trademark) C-80" produced by NOF Corporation) as a crosslinking agent were added thereto, and the mixture was kneaded at 50 °C for 10 minutes using an open roll, thereby preparing the rubber composition.

Next, on the surface of the base material used in the evaluation of distinctiveness, the rubber composition was arranged so as to overlap the coating film of the adhesive composition to form a laminate. This laminate was arranged in a mold and heated and pressurized at 170 °C for 10 minutes. In this way, an evaluation sample was produced in which a sealing member (having a thickness of 2.0 mm) being a crosslinked product of the rubber composition and the base material were bonded via an adhesive layer. Hereinafter, the numbers of the evaluation samples correspond to the numbers of the adhesive compositions used.

### [Evaluation of Adhesion]

A peel test was performed on the evaluation sample, and the adhesion between the base material and the sealing member was evaluated. In the peel test, a cut was made at an end of the sealing member that was not bonded to the base material to create a grip portion, and the grip portion was pulled in a direction perpendicular to the base material at a speed of 10 mm/sec to peel off the sealing member. Then, a state of a surface where the peeling occurred was visually observed. The adhesion was evaluated as good in the case of material failure (cutting of the sealing member), and as poor in the case of and interfacial failure.

The peel test was performed on two types of samples, namely "initial" and "after immersion in acidic water." A sample of the "initial" type was left at room temperature after sample production. In a sample of the "after immersion in acidic water" type, the produced sample was immersed in a sulfuric acid aqueous solution (pH 3.0) at 90 °C for 368 hours, followed by being taken out and left at room temperature. A test result of the sample after immersion in acidic water served as an indicator for determining whether acid-resistant adhesion under high temperature was good.

As a result, regarding samples No. 1 to No. 12, in both cases of initial and after immersion in acidic water, the adhesion was good (indicated by the ○ mark in Table 1 above). In contrast, regarding sample No. 13 having a high dye content, the initial adhesion was poor (indicated by the × mark in Table 2 above). Regarding sample No. 13, since the initial adhesion was poor, no evaluation of acid-resistant adhesion was performed. Regarding samples No. 14 and No. 15, since the compatibility of the colorant with the adhesive component was poor and the colorant precipitated in the adhesive composition, no evaluation of adhesive was performed.

### [Evaluation of Compression Durability]

A compression test was performed on the evaluation sample, and the durability of the sealing member was evaluated. The compression test was performed as follows. First, the evaluation sample was installed in a press machine, and fixed in a state in which the sealing member was compressed by 40% in a thickness direction. In this state, the temperature was raised to 100 °C and held for 10 minutes. Thereafter, cooling was performed until room temperature was reached, and the evaluation sample was taken out from the press machine. The sealing member of the evaluation sample taken out was cut in the thickness direction, and the cross-section was visually observed. The compression durability was evaluated as good in the case of no cracks, and as poor in the case of cracks.

As a result, regarding samples No. 1 to No. 13, none of them exhibited cracks, and the compression durability was good (indicated by the ○ mark in Table 1 and Table 2 above). On the other hand, regarding samples No. 14 and No. 15 in which the colorant having poor compatibility with the adhesive component was used, cracks occurred, and the compression durability was poor (indicated by the × mark in Table 2 above).

From the above, it is confirmed that, according to adhesive compositions No. 1 to No. 12, distinctiveness can be provided while adhesion is ensured, and whether the coating state is good can be easily determined.

### Description of Reference Numerals

1: member for fuel cells; 10: separator; 11: groove; 20: sealing member; 21: lip; 30: adhesive layer.

## Claims

1. An adhesive composition for fuel cell sealing members, bonding a base material of a thin plate shape that is a constituent member of a fuel cell with a sealing member produced from a rubber composition, **characterized by** comprising:
(A) an adhesive liquid, comprising an adhesive component and a solvent, the adhesive component having a silane coupling agent as a main component or having a silane coupling agent and an organic titanate compound as main components; and
(B) a dye, compatible with the adhesive component and dissolving in the solvent, wherein
a content of the dye is 3 parts by mass or more and 25 parts by mass or less in a case of nonvolatile content in the adhesive composition being 100 parts by mass; and
the adhesive composition is colored by the dye to a color different from a color of the base material or the sealing member.

2. The adhesive composition for fuel cell sealing members according to claim 1, coated on the base material or the sealing member to have a thickness of 0.01 µm or more and 1 µm or less.

3. The adhesive composition for fuel cell sealing members according to claim 1, coated on the base material.

4. The adhesive composition for fuel cell sealing members according to claim 3, wherein
the base material is a separator.

5. The adhesive composition for fuel cell sealing members according to claim 4, wherein
the separator has a silver-based color; and
the dye has a black-based color or red-based color.

6. The adhesive composition for fuel cell sealing members according to claim 1, wherein
the dye is an xanthene dye or azine dye.

7. A member for fuel cells, comprising a base material of a thin plate shape, a sealing member produced from a rubber composition, and an adhesive layer that bonds the base material with the sealing member, wherein
the adhesive layer is formed from the adhesive composition for fuel cell sealing members according to claim 1.

8. The member for fuel cells according to claim 7, wherein
the adhesive layer has a thickness of 0.01 µm or more and 1 µm or less.

9. The member for fuel cells according to claim 7, wherein
the base material is a separator made of stainless steel.

10. The member for fuel cells according to claim 7, wherein
the rubber composition comprises one or more selected from ethylene-propylene rubber, ethylene-propylene-diene rubber, and ethylene-butene-diene rubber.

11. A method for producing the member for fuel cells according to claim 7, **characterized by** comprising:
a coating process in which the adhesive composition for fuel cell sealing members is coated on the base material;
a determination process in which it is determined whether a coating state is good according to a color of the adhesive composition coated; and
a bonding process in which, in response to the coating state being determined to be good, the rubber composition that is uncrosslinked is arranged on a surface of the base material where the adhesive composition is coated to form a laminate, the laminate is subjected to heating and pressurization, the rubber composition is crosslinked to form the sealing member, and the sealing member is bonded to the base material.
